# EUROPEAN PATENT APPLICATION

(11) **EP 1 721 913 A1**
(43) Date of publication of application: **15.11.2006**
(21) Application number: 05103798.4
(22) Date of filing: 09.05.2005
(51) Int. Cl.: C08F 10/00, C08F 4/64, C08F 4/69

(54) **Microwave-promoted creation of catalytic species**

(71) Applicant: TOTAL PETROCHEMICALS RESEARCH FELUY, 7181 Seneffe (Feluy) (BE)
(72) Inventor: Everaert, Jacques, 3001 Heverlee (BE)
(74) Representative: Leyder, Francis

(57) **Abstract**

Use of microwave energy for producing active catalytic species in complexes having a dipolar or ionic structure.

## Description

This invention relates to the field of creating active catalytic species using microwave energy.

Heating and driving chemical reactions by the use of microwave energy has attracted considerable attention in recent years. Until then , safety and reliability issues associated with the flammability of organic solvents in a microwave field and the control of temperature and pressure were major drawbacks, but these have since mostly been overcome. A multitude of organic reactions have thus been performed using microwave energy as illustrated in Angew. Chem. Int. Ed. 2004, 43, 6250-6284: higher uniformity of temperature, leading to less overheating, allowing to limit degradation effects or to produce temperature-sensitive products more efficiently, higher reactions rates, higher productivity and/or better selectivity have often been claimed. These reactions were mainly performed in polar solvents and/or involving polar reagents.

The microwave region of the electromagnetic spectrum lies between the region of infrared radiation and radio frequency radiation and roughly corresponds to wavelengths between 1 cm and 1 m or frequencies between 300 MHz and 30 GHz.

The energy transfer to chemical entities, instead of occurring by convection or by conduction as in conventional heating, occurs by dielectric loss. Exposure to microwave radiation results in the molecules with polar or ionic moieties attempting to align their charges with the external oscillating electromagnetic field. The high oscillation frequency prevents largely that the molecules follow the imposed perturbation and thus part of the energy is absorbed through dielectric loss.

It is generally assumed today that, in the majority of cases, the reason for the observed reaction rate enhancement is a purely thermal/kinetic effect directly related to the high energy levels of the molecules that lead to a high reaction temperature that can rapidly and directly be attained when irradiating polar material in a microwave field. This high reaction rate may result both, from the rapid and uniform heating of a (polar) solvent that strongly absorbs the microwave energy or from high thermal energy levels of the reaction sites : the presence of hot spots at the site of the reactive species having a noticeably higher local temperature than the bulk temperature is probably responsible for most rate enhancements above the rates expected on the basis of the measured bulk temperature.

Increasing reaction rates and high conversion efficiencies are thus especially observed when the reagent structure preferentially and directly absorbs microwave energy that is thus not transferred by the heated solvent. Microwave heating excites the vibrational-rotational modes of the molecules and this energy is partially transferred to translational modes, thus resulting in dielectric loss and energy dissipation resulting in thermal effect whereby the absorbing molecules can reach a "local" temperature well above the bulk temperature; this may even allow to work at conditions beyond the usual boiling limits of a given solvent. In some cases, the molecule may absorb the microwave energy in a mode that is directly related to the chemical reaction, thus resulting in an even more efficient mode of energy absorption, which would represent a form of "specific" effect. The existence of specific microwave effects remains however an issue of much debate.

In the field of modifying the activity of catalyst systems, several methods were developed in the past.

For example US-A- 3485771 to Phillips referred to the use of a plasma to activate a catalyst at a lower activation temperature; the activation disclosed in that patent does not refer to the use of microwave energy and involves only the step of dehydration of the catalyst thereby forming the silylchromate. It does not involve the chromium reduction or an acid-base exchange step.

Microwave energy was used in relation to producing catalyst systems in UK-A-1530445. The patent refers to a process involving the use of microwave energy for the production of a supported Ziegler catalyst component comprising an inorganic oxide or elementary carbon and a magnesium compound. In this patent, microwave energy is used for producing the support and does not play any role in the activation step..

US-A-5719095 and EP-A-0615981 disclosed the use of microwave energy for producing a supported catalyst system containing a metallocene catalys, whereby the catalyst is fixed in a more efficient way to the support including the co-catalyst in order to limit the presence of free catalyst in the reactive medium.

WO04/089998 described a single step process for preparing a Ziegler type procatalyst system comprising magnesium chloride, supported titanium chloride with an internal electron donor, and a cocatalyst based on an organoaluminium compound, under microwave irradiation. Said catalyst system was used for the preparation of lower alfa-alkene polymers, notably polypropylene.

There is thus a need to develop a technology to use microwave energy in the field of production of active catalytic species.

It is an aim of the present invention to use microwave energy to produce active catalytic species.

It is another aim of the present invention to create more active sites in catalyst systems.

It is also an aim of the present invention to create catalytic species having a very high activity.

It is a further aim of the present invention to produce the catalytic species rapidly and efficiently.

It is yet a further aim of the present invention to produce reduced overheating at the reactor walls and thus lesser formation of secondary or degradation products than conventional methods.

Accordingly, the present invention discloses the use of microwave energy for producing active catalytic species involving structures having a dipolar or ionic nature.

Such structures are particularly suitable for interacting with a source of microwave energy and produce either more active species or a more active structure of active species than conventional methods.

The catalytic species that can be produced using microwave energy are not particularly limited and include for example metallocene and other coordination-complex , Ziegler-Natta and chromium-based catalyst systems. All these catalyst systems have in common that, when microwave energy is used, they all have a larger percentage of active species and/or the active species are more active and/or the creation of these active species takes a shorter time than when conventional methods are used.

These catalyst systems are very sensitive to the presence of the most common microwave absorbing species such as polar solvents or ionic liquids that would inactivate or block the active catalytic species. Dielectric or microwave heating is therefore not considered as an efficient way for heating chemical mixtures containing the catalyst system up to the temperatures conventionally used for activating these systems.

### List of figures.

Figure 1 represents the mechanism for activating chromium-based catalyst systems.

Figure 2 represents the mechanism for activating Ziegler-Natta catalyst systems.

Figure 3 represents the mechanism for activating silica-supported metallocene catalyst systems.

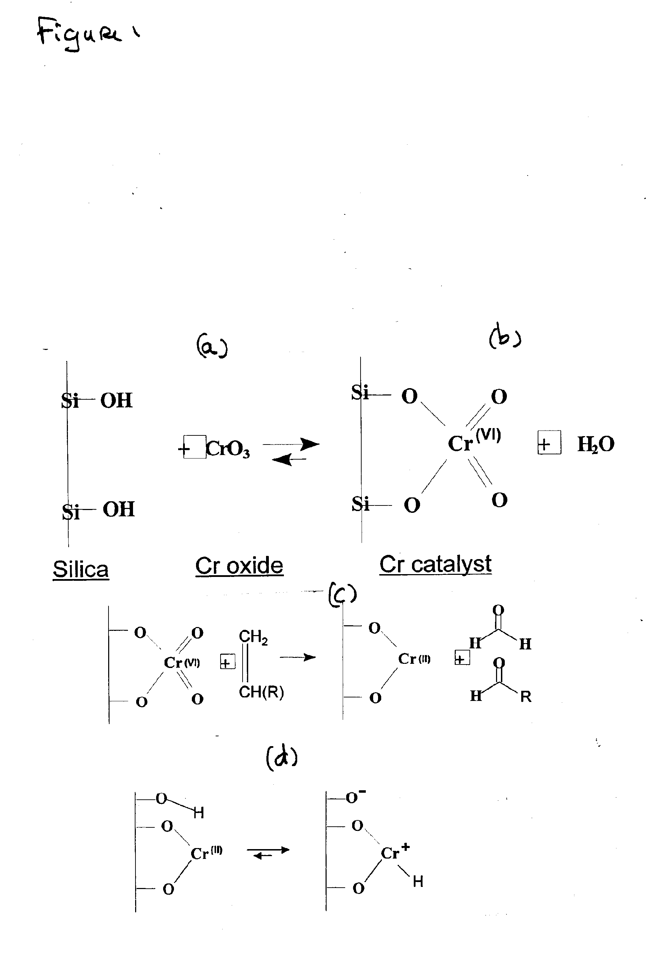

The mechanism for creating active species in chromium-based catalyst systems used for the polymerisaton of alkenes is schematically illustrated in figure 1. It comprises a pre-activation step that is carried out in the absence of alkene aznd is represented in figure 1 (a) and (b) and the activation step that necessitates the presence of alkene and is represented in figure 1 (c) and (d). In conventional methods, chromium oxide is impregnated on the surface of the support (a). This impregnated support is dried and then dehydrated at high temperature and under a flow of dry air to fix the chrome VI as silyl chromate (b). The chromium VI is then reduced to chromium II by reaction with monomer or co-monomer (c). The active species is formed by acid-base exchange with a neighbouring silanol present on the support structure (d). This method allows to produce only a low fraction of active catalytic species, typically involving some 10 % of the chromium atoms. Typically, the chromium based catalyst systems comprise about 1 wt% of chromium and the fraction of active sites thus represents about 0.1 wt% as Cr. In the present invention, the sequences (a) and (b) for producing the pre-active species can advantageously be carried out using microwave energy. This new method results in producing highly active catalyst systems: the improvement is measured by an increase in productivity of at least 20 %.

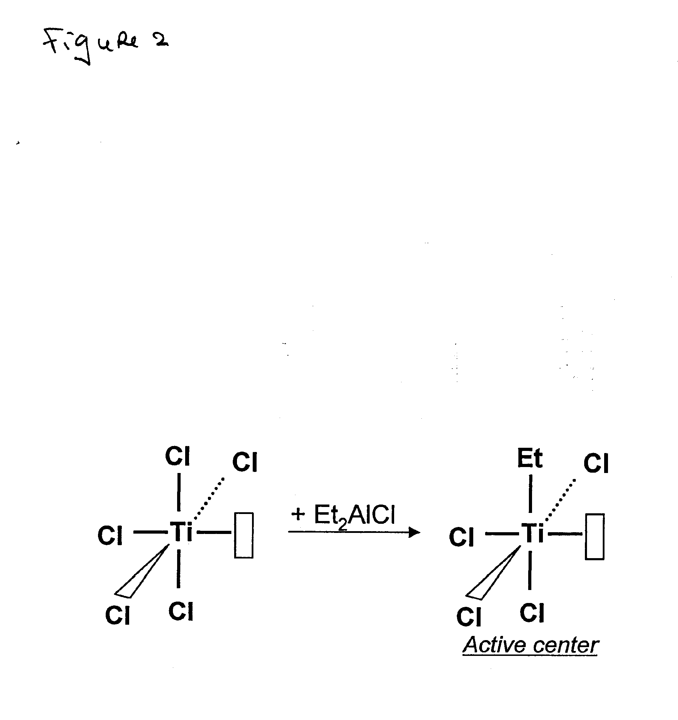

The mechanism for creating active sites in Ziegler-Natta catalyst systems is schematically illustrated in figure 2. In conventional methods, a titanium chloride compound is supported. The support is either magnesium chloride that includes electron-donor compounds or the titanium choride compound is precipitated together with the compounds forming the support and the electron-donor compounds; this supported structure is then modified by addition of an aluminium alkyl or aluminium alkyl chloride compound to produce the active catalytic species. In the present invention, that addition reaction is carried out using microwave energy.

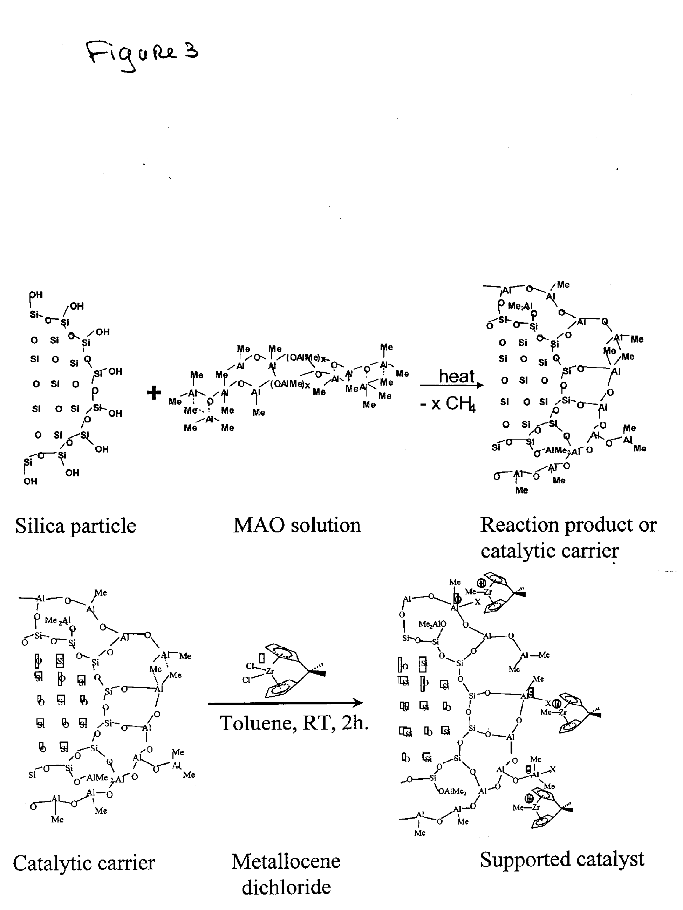

In metallocene catalyst systems, the activation is carried out by addition of an activating agent having an ionising action. In a preferred embodiment of the invention, represented in figure 3, the activating agent is first added to a support and the metallocene component dissolved in a solvent is then added to the impregnated support. Alternatively, the metallocene and activating agent can first be mixed and then deposited on the support.

Metallocene catalyst components may be represented by formula I

R"s (CpRn) (C'pR'm) MQ2

wherein
Cp and C'p are unsubstituted or substituted cyclopentadienyl, indenyl or fluorenyl; each R is independently selected from hydrogen or hydrocarbyl having from 1 to 20 carbon atoms;
each R' is independently selected from hydrogen or hydrocarbyl having from 1 to 20 carbon atoms;
R" is an optional structural bridge imparting stereorigidity between the two cyclopentadienyl rings and s is 1 if the bridge is present and 0 if there is no bridge; M is a metal Group 4 of the periodic Table;
Q is hydrogen or alkyl having from 1 to 6 carbon atoms or halogen.

Preferred metallocene components may be selected from bridged bisindenyl, bridged bis tetrahydroindenyls, bridged cyclopentadienyl-fluorenyl such as bridged (3-t-butyl,5-methyl-cyclopentadienyl)(3,6-tert-butyl-fluorenyl) or unbridged bis(n-butyl-cyvlopentadienyl) components.

Any activating agent having an ionising action known in the art may be used for activating the metallocene component. For example, it can be selected from aluminium-containing or boron-containing compounds. The aluminium-containing compounds comprise aluminoxane, alkyl aluminium and/or Lewis acid.

The aluminoxanes are preferred and may comprise oligomeric linear and/or cyclic alkyl aluminoxanes represented by the formula: 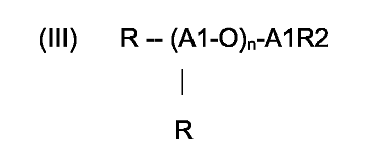 for oligomeric, linear aluminoxanes and 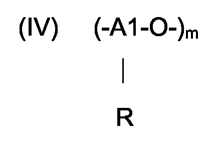 for oligomeric, cyclic aluminoxane,
wherein n is 1-40, preferably 10-20, m is 3-40, preferably 3-20 and R is a C₁-C₈ alkyl group and preferably methyl.

Suitable boron-containing activating agents that can be used comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The support if present can be a porous mineral oxide. It is advantageously selected from silica, alumina and mixtures thereof. Preferably it is silica.

The microwave frequencies that can be used in the present invention range between 500 MHz and 15 GHz. Preferably all work is carried out in the range between 1 and 5 GHz.

The microwave energy is typically of from 300 MHz to 30 GHz.

The active catalytic species of the present invention are suitable for polymerising ethylene and alpha-olefins using any known polymerisation method.

It is observed that less undesirable secondary products are formed during the preparation of the active catalytic species than in prior art method, thus leading to cleaner products.

### Examples.

Metallocene catalyst component ethylene-bis(tetrahydroindenyl) zirconium dichloride (THI) was deposited on a silica support impregnated with methyl aluminoxane (MAO) as follows.

### Example 1: Synthesis of silica/MAO.

2 g of silica sold by Grace under the trade name Sylopol® 952X1836 thoroughly dried were introduced into a 20 ml glass reactor equipped with a magnetic stirrer. 11 mL of toluene were then added to the reactor followed by the addition of 4 mL of methyl aluminoxane (30 wt%). The reactor (tube) was sealed and placed immediately in the microwave oven and the reaction was allowed to take place: the microwave power was of 300 watt. After reaction, the suspension was filtered on a porosity 3 fritt. The filtrate was then washed 3 times with 10 mL of toluene, 3 times with 10 mL of pentane and dried under reduced atmosphere until a constant weight was obtained. It was observed that the silica/MAO support was very efficient in absorbing microwave energy.

Ethylene-bis-(tetrahydro-indenyl) zirconium dichloride (THI) was then deposited on silica impregnated with MAO.

### Example 2: One-pot method.

11 mL of toluene were placed in a 20 mL glass reactor. 4 mL of MAO (30 wt%) were added and the mixture was stirred for 1 minute with a magnetic stirrer. 0.04 g of THI were then added to the reactor and the mixture was stirred for 3 minutes. 2 g of the same silica Sylopol® 952X1836 were added to the reactor under stirring in order to homogenise the reaction medium. The reactor (tube) was sealed and placed immediately in the microwave oven and the reaction was allowed to take place: the microwave power was of 300 watt. After reaction, the suspension was filtered, washed and dried as described in example I. As in the other example, the solvent remained at a temperature of less than 60 °C and the number of active sites showed a substantial increase as compared to that obtained with the same ingredients mixed using the conventional technique. That increase was measured by an increase in productivity.

### Example 3: Two-step method.

Silica/MAO was prepared by the conventional method: 2 g of silica sold by Grace under the trade name Sylopol® 952X1836 thoroughly dried were introduced into a 20 ml glass reactor equipped with a magnetic stirrer. 11 mL of toluene were then added to the reactor followed by the addition of 4 mL of methyl aluminoxane (30 wt%). The mixture was kept under stirring at a temperature of 110°C for a period of time of 2 hours. 2 g of that silica/MAO were placed in a 20 mL glass reactor equipped with a magnetic stirrer. 11 mL of toluene were added to the reactor followed by the addition of 0.04 g of THI under stirring. The reactor (tube) was sealed and placed immediately in the microwave oven wherein magnetic stirring occurred and the reaction was allowed to take place: the microwave power was of 300 watt. After reaction, the suspension was filtered, washed and dried as described in example I. As in the previous example, an increased number of active sites was observed, as measured by an increase in productivity.

## Claims

1. Use of microwave energy for producing active catalytic species having dipolar or ionic structure in a catalyst system.

2. Use according to claim 1 wherein the catalyst system consists of a metallocene component, an activating agent and an optional support.

3. Use according to claim 2 wherein the production of active catalyst species comprises the steps of:
a) impregnating a support with an activating agent
b) adding the metallocene component to the impregnated support.

4. Use according to claim 2 or 3 wherein the activating agent is aluminoxane

5. Use according to any one of claims 2 to 4 wherein the metallocene compound is a bridged bis-tetrahydro)indenyl compound.

6. Use according to claim 1 wherein the catalyst is a chromium-based catalyst system.

7. Use according to claim 1 wherein the catalyst is a Ziegler-Natta-based catalyst system.

8. Use according to any one of the preceding claims wherein the microwave frequencies are of from 300 MHz to 30 GHz.

9. Use according to claim 8 wherein the microwave frequencies are of from 1 to 5GHz
